# EUROPEAN PATENT SPECIFICATION

(11) **EP 3 464 414 B1**
(45) Date of publication and mention of the grant of the patent: **30.09.2020**
(21) Application number: 17725482.8
(22) Date of filing: 15.05.2017
(51) Int. Cl.: C08G 59/50, C08G 59/68

(54) **LOW-VISCOSITY EPOXY RESINS AND LOW VOC CURABLE FORMULATIONS THEREFROM**
NIEDRIGVISKOSE EPOXIDHARZE UND HÄRTBARE FORMULIERUNGEN MIT NIEDRIGEM GEHALT AN FLÜCHTIGEN ORGANISCHEN VERBINDUNGEN DAMIT
RÉSINES ÉPOXY À FAIBLE VISCOSITÉ ET FORMULATIONS DURCISSABLES À FAIBLE TENEUR EN COV À PARTIR DESDITES RÉSINES

(30) Priority: 25.05.2016 US 201662341246 P
(43) Date of publication of application: 10.04.2019
(73) Proprietor: DOW GLOBAL TECHNOLOGIES LLC, Midland, MI 48674 (US)
(72) Inventor: JELIC, Nebojsa, 8807 Freienbach (CH); KOENIGER, Rainer, 8807 Freienbach (CH); LOTTI, Luca, 8807 Freienbach (CH); MORLEY, Timothy A., 8807 Freienbach (CH); SIKMAN, Zeljko, 8810 Freienbach (CH); TSOUTSOURA, Aikaterini, 8003 Zuerich (CH)
(74) Representative: Boult Wade Tennant LLP
(86) International application number: PCT/US2017/032590
(87) International publication number: WO 2017/205090

(56) References cited:
- WO-A1-2014/078218
- WO-A1-2014/078219
- WO-A1-2015/119881
- WO-A1-2015/142771

## Description

The present invention relates to curable moldable compositions comprising heat resistant fiber compositions, such as carbon fiber, glass fiber, or their admixture, a two component resin mixture of (i) one or more epoxy resins, such as bisphenol A or F diglycidyl ether epoxy resins, and (ii) a hardener comprising a combination of triethylenetetraamine (TETA) and from 3 to 15 wt.%, based on the weight of the TETA, of 2-phenylimidazole (2-PI), wherein the two component resin mixture has upon mixing a viscosity of from 5 to 100 mPa.s at 130 °C and has a demold time of 90 s or less at 130 °C and 101 kPa, as well as composite articles made therefrom and methods of making the composite articles, such as by resin transfer molding or wet compression molding.

Global demand for reduced CO₂ emissions and fuel-efficient vehicles has driven the development of lighter weight vehicles, for example, to facilitate the downsizing of conventional power trains while delivering advantages to electrically powered vehicles by the reduction in the energy required per kilometer of travel. While thermosetting resin composite materials offer a lightweight alternative to conventional steel and aluminum frame, body and load-bearing vehicle components. Such thermosetting resin composite materials allow high design flexibility in a relatively low cost process. Such composite materials offer an attractive alternative to metals due to their high strength to weight ratio, as well as their resistance to corrosion. However, use of thermosetting composites have been characterized in production by long cycle times. Because any composite containing material should be manufactured in a competitive time frame to adequately compete with metal materials, cycle time issues have restricted their widespread acceptance in volume production in the automotive industry.

Composite materials produced with an epoxy resin containing matrix would have to possess a curing profile that enables efficient fiber wetting and mold filling prior to gelation followed by an extremely rapid curing profile so as to enable the composite part to be rapidly demolded. Existing fast curing resin transfer molding (RTM) formulations in the automotive industry have contained diethylenetriamine (DETA) as a fast curing amine. However, DETA has been regulated due to health and safety concerns; and many key automotive original equipment manufacturers (OEMs) have stopped using DETA curing agents.

Fast curing formulations for RTM are required to maintain the correct balance of gel time (long so as to enable fiber wetting and mold filling) and demold time (short, meaning rapid cure) without using DETA. More recent compositions comprise triethylenetetraamine (TETA). For example, WIPO patent publication no. WO 2015119881 A1, to Dow Global Technologies, LLC., has disclosed epoxy resin and (TETA) compositions that exhibit high reactivity using hardeners that are classified as non-toxic. However, the composite products of compositions having TETA alone yield composite materials wherein the cured resins have an insufficiently high glass transition temperature (Tg) to enable ready use in RTM applications where high heat is used to cure the resin, or for use automotive, heavy machinery and oil and gas applications where heat resistance is critical

The present inventors have sought to solve the problem of providing thermosetting resins and composites thereof which provide each of a long gel time, a rapid cure time after gelling or a short demold time, and a high Tg so that composite articles made therefrom are suitable for use in automotive applications.

### STATEMENT OF THE INVENTION

1. In accordance with the present invention, curable moldable compositions comprise from 10 to 80 volume %, or, preferably, at least 25 volume %, or, preferably, up to 70 volume %, or, more preferably, at least 35 volume % or up to 60 volume % of heat resistant fiber compositions, such as carbon fiber, glass fiber, ceramic fiber, acrylonitrile fibers, aramid fibers, or their admixtures, a two component resin mixture of (i) one or more epoxy resins, such as bisphenol A or F diglycidyl ether epoxy resins, and (ii) a hardener comprising a combination of triethylenetetraamine (TETA) and from 3 to 15 wt.%, or, preferably, from 6 to 13 wt.%, based on the weight of the TETA, of 2-phenylimidazole (2-PI), wherein the two component resin mixture has upon mixing a viscosity of from 5 to 100 mPa.s at 130°C, or, preferably, from 10 to 60 mPa.s at 130 °C, or, more preferably, less than 50 mPa.s at 130 °C.
2. In accordance with the curable moldable compositions of the present invention as in item 1, above, wherein the (i) one or more epoxy resins is a liquid epoxy resin that has a viscosity of from 500 to 30,000 mPa.s at room temperature or, preferably, from 1000 to 10,000 mPa.s at room temperature.
3. In accordance with the curable moldable compositions of the present invention as in any one of items 1 or 2, above, wherein the two component resin mixture of the curable moldable compositions has a DSC glass transition temperature (Tg) of from 130 to 180 °C, or, preferably, from 130 to 160 °C when cured at 130 °C for 90 seconds at a pressure of 101 kPa.
4. In accordance with the curable moldable compositions of the present invention as in any one of items 1, 2, or 3, above, wherein the ratio of molar equivalents of the (i) one or more epoxy resins to the molar equivalents of amine hydrogens in the combination of TETA and 2-PI in the two component resin mixture ranges from 0.7:1 to 1.4:1, or, preferably, from 0.85:1 to 1.3:1.
5. In accordance with the curable moldable compositions of the present invention as in any of items 1, 2, 3, or 4, above, wherein the one or more heat resistant fiber compositions is chosen from a continuous fiber material, such as continuous rovings or a woven mat or preform of fibers, a non-woven fiber material, such as mass of discrete fibers having a length of from 0.1 cm to 20 cm, a mat or a stack of two or more mats, and a material comprising both continuous and discrete fibers, for example, chopped fibers.
6. In accordance with the curable moldable compositions of the present invention as in any of items 1, 2, 3, or 4, above, wherein the composition further comprises one or more impact modifiers, internal mold release agents, reactive diluents, coalescents, pigments, particulate fillers, extenders, tackifiers, antioxidants and wetting agents.
7. In another aspect of the present invention, composite articles comprise a matrix of a cured two component resin mixture of (i) one or more epoxy resins, such as bisphenol A or F diglycidyl ether epoxy resins, and (ii) a hardener comprising a combination of triethylenetetraamine (TETA) and from 5 to 15 wt.%, or, preferably, from 6 to 13 wt.%, based on the weight of the TETA, of 2-phenylimidazole (2-PI), and, within the matrix, from 10 to 80 volume %, or, preferably, at least 25 volume %, or, preferably, up to 70 volume %, or, more preferably, at least 35 volume % or up to 60 volume % of the total composite article of a heat resistant fiber composition, such as carbon fiber, glass fiber, ceramic fiber, acrylonitrile fibers, aramid fibers, or their admixtures.
8. In accordance with the composite articles of the present invention as in item 7, above, wherein the cured two component resin mixture has a DSC glass transition temperature (Tg) of from 130 to 180 °C, or, preferably, from 130 to 160 °C when cured at 130 °C for 90 seconds at a pressure of 101 kPa, and a demold time of 90 s or less at 130 °C and 101 kPa.
9. In accordance with the composite articles of the present invention as in any one of items 7 or 8, above, wherein the ratio of molar equivalents of the (i) one or more epoxy resins to the molar equivalents of amine hydrogens in the (ii) hardener in the cured two component resin mixture ranges from 0.7:1 to 1.4:1, or, preferably, from 0.85:1 to 1.3:1.
10. In accordance with the composite articles of the present invention as in any one of items 7, 8, or 9, above, wherein the one or more heat resistant fiber compositions is chosen from a continuous fiber material, such as continuous rovings or a woven mat or preform of fibers, a non-woven fiber material, such as mass of discrete fibers having a length of from 0.1 cm to 30 cm, a mat or a stack of two or more mats, and a material comprising both continuous and discrete fibers, for example, chopped fibers.
11. In yet another aspect of the present invention, methods of making a fiber reinforced resin matrix composite article comprise forming a two component resin mixture of (i) one or more epoxy resins, such as bisphenol A or F diglycidyl ether epoxy resins, and (ii) a hardener comprising a combination of triethylenetetraamine (TETA) and from 3 to 15 wt.%, or, preferably, from 6 to 13 wt.%, based on the weight of the TETA, of 2-phenylimidazole (2-PI), wherein the two component resin mixture has upon mixing a viscosity of from 10 to 100 mPa.s at 130 °C, or, preferably, from 10 to 60 mPa.s at 130 °C, or, more preferably, less than 50 mPa.s at 130 °C; wetting a heat resistant fiber composition comprising one or more heat resistant fibers, such as carbon fiber, glass fiber, ceramic fiber, acrylonitrile fibers, aramid fibers, or their admixtures, in the amount of from 10 to 80 volume %, or, preferably, at least 25 volume %, or, preferably, up to 70 volume %, or, more preferably, at least 35 volume % or up to 60 volume % of the total heat resistant fiber composition and the total two component resin mixture; and curing the two component resin mixture at a temperature of from 60 to 200 °C, or, preferably, from 80 to 160 °C or, more preferably, from 100 to 150 °C and at a pressure of from 200 to 10,000 kPa (2 to 100 bar), or, preferably, from 500 to 5500 kPa (10 to 55 bar) and for a time of from 15 to 300 seconds or, preferably, up to 120 s or, preferably, 30 s or more.
12. In accordance with the methods of making a fiber reinforced resin matrix composite article as in item 10, above, wherein the wetting comprises filling a mold or cavity, such as an open mold, with the heat resistant fiber compositions followed by closing the mold or cavity and, before or after closing the mold or cavity, introducing the two component resin mixture, such as by injecting, spraying or pouring it into the mold or cavity prior to curing.
13. In accordance with the methods of making a fiber reinforced resin matrix composite article as in any one of items 11 or 12, above, wherein the heat resistant fiber composition is chosen from a continuous fiber material, such as continuous rovings or a woven mat or preform of fibers, a non-woven fiber material, such as mass of discrete fibers having a length of from 0.1 cm to 30 cm, a mat or a stack of two or more mats, and a material comprising both continuous and discrete fibers, for example, chopped fibers.
14. In accordance with the methods of making a fiber reinforced resin matrix composite article as in any one of items 11, 12, or 13, above, wherein the method consists essentially of no post curing step.

Unless otherwise indicated, conditions of temperature and pressure are ambient temperature and standard pressure. All ranges recited are inclusive and combinable.

Unless otherwise indicated, any term containing parentheses refers, alternatively, to the whole term as if no parentheses were present and the term without them, and combinations of each alternative. Thus, the term "(poly)alkoxy" refers to alkoxy, polyalkoxy, or mixtures thereof.

All ranges are inclusive and combinable. For example, the term "a range of 50 to 3000 cPs, or 100 or more cPs" would include each of 50 to 100 cPs, 50 to 3000 cPs and 100 to 3000 cPs.

As used herein, unless otherwise indicated, the term "amine hydrogen equivalent weight" or AHEW means the amount in grams of an amine that yields one molar equivalent of hydrogen in reaction as measured by titration using ASTM D 2074-07 (2007).

As used herein, the term "ASTM" refers to the publications of ASTM International, West Conshohocken, PA.

As used herein, the term "EEW" or "epoxy equivalent weight" means the amount determined using a Metrohm 801 Robotic™ USB sample processor XL and two 800 Dosino™ dosing devices for the reagents (Metrohm USA, Tampa, FL). The reagents used are perchloric acid in acetic acid 0.10 N and tetraethylammonium bromide. The electrode for the analysis is an 854 Iconnect™ electrode (Metrohm). For each sample, 1 g of dispersion is weighed out into a plastic sample cup. Then 30 mL of THF (tetrahydrofuran) is first added and mixed for 1 minute (min) to break the shell on the dispersion. Next, 32 mL of glacial acetic acid is added and mixed for another 1 min to fully dissolve the sample. The sample is then placed on the auto sampler and all relevant data (e.g., sample ID, sample weight) is added to the software. From here the start button is clicked to start the titration. Thereafter, 15 mL of tetraethylammonium bromide is added, and then the perchloric acid is slowly added until a potentiometric endpoint is reached. Once the potentiometric endpoint is reached, the software calculates an EEW value based on the amount of sample and perchloric acid used.

As used herein, unless otherwise indicated, the term "solids," "solids content" refers to the total weight of epoxy resins, hardeners, catalysts or accelerators, and other non-volatile materials, such as pigments, silicones and non-volatile additives that remain after cure, expressed as a total wt.% of the composition, regardless of their state as liquids, gases or solids. Solids exclude solvents, such as xylene, and non-reactive diluents, such as, for example, plasticizers like butyl adipates.

As used herein, unless otherwise indicated, the term "viscosity" means the result obtained for a given two component resin mixture that was placed in a preheated shear rheometer (MCR301, Anton Paar USA Inc., Ashland, VA) equipped with parallel plates (25 mm diameter, gap 1 mm) wherein the viscosity was measured at 130 °C and 101 kPa with a shear rate of 10 s-1.

As used herein, the term "DSC Tg" means the glass transition temperature of a given material as determined by the method disclosed in the Examples, below.

As used herein, the abbreviation "wt.%" stands for weight percent.

The present inventors have discovered a curable moldable composition that is especially useful for the manufacture lightweight fiber composites, such as carbon fiber composites via the RTM or liquid compression molding processes. The curable moldable compositions of the present invention do not require a toughening agent because they provide cured composites with mechanical performance in the form of a 90° tensile modulus of 8300 MPa and 90° tensile strength of 56 MPa. In addition, this mechanical performance can be gained "out of tool" with no requirement for additional process steps such as post curing. The demold time for the resin system is 90 s or less at 130 °C and 101 kPa for the inventive resin system, thus demonstrating the capability of the inventive system to enable mass production of carbon fiber composites with higher build volumes via the resin transfer molding (RTM) or LCM techniques. Still further, the present invention enables the provision of composites with the desired mechanical performance without the use of a cycloaliphatic epoxy resin, a cycloaliphatic anhydride hardener or a toughening agent; further, the two component resin mixture of the present invention cures as fast as some resin compositions that have such hardeners and/or toughening agents. For example, a lightweight, carbon fiber composite achieved via high pressure injection molding and comprising a cured two component resin mixture of the present invention delivers an increase of up to 30 °C in DSC glass transition temperature (DSC Tg) versus the same two component resin mixture with triethylenetetraamine (TETA) alone and significantly improves "demold time" without sacrificing the long "open time" or latency of the epoxy system.

The two component resin mixture of the present invention provides at the end of cure under given conditions of 90 seconds at 130 °C and 1 atm or 0.1 m.Pas pressure an unexpectedly high DSC Tg of from 130 to 180 °C, preferably, from 130 to 160 °C. Composites having such a high DSC Tg are useful in automotive applications for use in high temperature environments, for example, located near engines, manifolds or exhaust components.

The two component resin mixture of the present invention comprises a hardener component (ii) wherein the triethylenetetraamine carries 2-phenylimidazole.

In the two component resin mixture of the present invention, the (i) epoxy resins can be any compound which contains, on average, more than one epoxy moiety per molecule, or a mixture of such epoxy resin compounds, and which has a desired viscosity upon mixing with the desired amount of (ii) the hardener to form a two component resin mixture of from of from 10 to 100 mPa.s at 130°C, or, preferably, from 10 to 60 mPa.s at 130 °C, or, more preferably, less than 50 mPa.s at 130 °C. Epoxy resins may include partially advanced epoxy resins, i.e. the reaction of a polyepoxide and a suitable aromatic or alicyclic polyol, wherein the reaction product has an average of more than one unreacted epoxide unit per molecule. Suitable polyepoxides (polyglycidyl ethers of a polyol) may be prepared by reacting an epihalohydrin with an aromatic or alicyclic polyol or a halogenated aromatic or alicyclic polyol. The preparation of such compounds is well known in the art. See Kirk-Othmer Encyclopedia of Chemical Technology 3rd Ed. Vol. 9 pp 267-289 (incorporated herein by reference).

Preferably, the average number of epoxide moieties per molecule is 2.8 or less, or, more preferably from 1.8 to 2.5. In resin mixtures, the average of number of epoxide moieties refers to the weighted average of the number of epoxide moieties in the mixture. For example, in a 50/50 w/w mixture of one epoxy resin having 2 epoxide groups on average and another epoxy resin having 2.6 epoxide groups on average, the mixture will have an average number of epoxide groups equal to 2.3.

Preferred polyols for making epoxy resins are the bisphenols; hydrogenated bisphenols; novolac resins, i.e. the reaction product of phenols and simple aldehydes, preferably formaldehyde; and polyalkylene glycols. The reaction product of phenol and an aldehyde, preferably formaldehyde, is a well-known product, as the process for its production. Such a product is commonly referred to as a novolac resin. Other such polyols may comprise aryl polyol, aryl polyol substituted with an alkyl or halo moiety, a polyaryl polyol wherein the aryl moieties are connected by direct bonds, alkylene, haloalkylene, cycloalkylene, carbonyl, sulfonyl, sulfinyl, oxygen, or sulfur, such poly aryl moieties being optionally substituted with one or more alkyl or halo moieties; or the oligomeric reaction product of an aldehyde and phenol. Other polyols include polyhydroxy hydrocarbons and halogenated polyhydroxy hydrocarbons, bisphenols, biscyclohexanols, polyphenols, and polyoxyalkylenes. Among preferred polyhydroxy hydrocarbons are the dihydroxy phenols and the polyalkylene glycols. Preferably, the dihydroxy phenols include those which contain substituents that are non-reactive with the phenolic groups. Illustrative of such phenols are 2,2-bis(3,5-dibromo-4-hydroxyphenyl) propane; 2,2-bis(4-hydroxyphenyl) propane; 2,2-bis(3,5-dichloro-4-hydroxyphenyl) propane; bis (4-hydroxyphenyl) methane; 1,1-bis(4-hydroxyphenyl)-1-phenyl ethane; 1,1'-bis(2,6-dibromo-3,5-dimethyl-4 hydroxy phenyl) propane; bis (4-hydroxyphenyl) sulfone; bis (4-hydroxyphenyl) sulfide; resorcinol; hydroquinone; and the like. The preferred dihydroxy phenolic compounds are 2,2-bis(4-hydroxyphenyl) propane (bisphenol A), 2,2 bis(4 hydroxyphenyl) methane (bisphenol F) and 2,2-bis(4-hydroxy-3,5-dibromophenyl) propane. Cycloalkylene as used herein refers to monocyclic and polycyclic hydrocarbon moieties.

As used herein "haloalkyl" refers to a compound with a carbon chain and one or more of the hydrogens replaced with a halogen. Haloalkyl also means compounds wherein all of the hydrogen atoms have been replaced by halogen atoms. "Alkylene" as used herein refers to a divalent alkyl moiety.

The epoxy resins of the present invention may comprise any conventional epoxy resins, such as bisphenol A or F epoxy resins, phenolic epoxy resins, polyphenolic epoxy resins, novolac epoxy resins and cresol epoxy resins, as well as mixtures thereof.

Suitable epoxy resins for making the two component resin mixture of the present invention may include any conventional liquid or semi-solid epoxy resins having an EEW below 500, or, preferably, below 250, such as bisphenol A or F epoxy resins, phenolic epoxy resins, polyphenolic epoxy resins, novolac epoxy resins and cresol epoxy resins, as well as mixtures thereof, for example, mixtures of bisphenol epoxy resins and novolac epoxy resins.

Preferably, the epoxy resins of the present invention are linear or difunctional glycidyl ethers of polyols, chosen from epoxy resins having an epoxy equivalent weight (EEW) of from 150 to 1000 or, preferably, below 250.

The two component resin mixture compositions of the present invention will generally have a solids content of 100 wt.% solids wherein the compositions can be easily incorporated with the heat resistant fiber compositions by conventional injection, spray, or pouring into a mold.

The two component resin mixture compositions of the present invention are present as solutions that include up to 30 wt. % diluent, preferably, to aid in resin flowability, up to 20 wt. %, or 1 wt.% or more where the diluent is a reactive diluent. Suitable reactive diluents may include, for example, cresol glycidyl ether, butyl glycidyl ether and C₁₂-C₁₄ aliphatic glycidyl ether, and diglycidyl ethers such butanediol diglycidyl ether, hexanediol diglycidyl ether, cyclohexanedimethanol diglycidyl ether, and triglycidyl ethers such as trimethylolpropane triglycidyl ether and glycerol triglycidyl ether.

The stoichiometric ratio of epoxy resin in the epoxy component to the amine hydrogen equivalents in the hardener of the two component resin mixture of the present invention may range from 0.7:1 to 1.4:1, or, preferably, from 0.85:1 to 1.3:1, or, most preferably, 0.90:1 to 1:0.90.

Composites made in accordance with the invention may have fiber contents of at least 10 volume percent, preferably at least 25 volume percent or at least 35 volume percent, up to 80 volume percent, preferably up to 70 volume percent, more preferably up to 60 volume percent. Accordingly, the curable moldable compositions may comprise the same fiber contents.

The curable moldable compositions of the present invention may also contain other optional components such as impact modifiers or tougheners, internal mold release agents (IMR), pigments, antioxidants, preservatives, reinforcing fibers short (up to 15.24 cm (6 inches) in length or, preferably, up to 5.08 cm (2 inches) in length, more preferably up to 1.27 cm 9 (½ inch) in length, non-fibrous particulate fillers including nanoparticles, wetting agents, and internal mold release agents the like. An electroconductive filler may be present in the mixture (ii) of triethylenetetraamine and 2-phenylimidazole.

Suitable impact modifiers include natural or synthetic polymers having a DSC Tg of lower than -40 °C, preferably present in the form of small particles. These include natural rubber, styrene-butadiene rubbers, polybutadiene rubbers, isoprene rubbers, polyethers such as poly(propylene oxide), poly(tetrahydrofuran) and butylene oxide-ethylene oxide block copolymers, core-shell rubbers, and mixtures of any two or more of the foregoing. The particles can be dispersed within the epoxy resin or hardener and preheated together with the epoxy resin or (ii) mixture of triethylenetetraamine and 2-phenylimidazole prior to forming the hot reaction mixture.

Preferably, the two component resin mixtures of the present invention comprise an internal mold release agent. Such an internal mold release agent may constitute up to 5 wt.%, or, preferably, up to 1 wt.% of the total two component resin mixture. Suitable internal mold release agents are well known and commercially available, including those marketed as Marbalease™ additives by Rexco-USA, Mold-Wiz™ additives by Axel Plastics Research Laboratories, Inc., Chemlease™ additives by Chem-Trend, PAT™ by Wurtz GmbH, or Waterworks Aerospace Release by Zyvax™ and Kantstik™ additives by Specialty Products Co. In addition to (or instead of) adding the internal mold release agent during mixing, it is also possible to combine such an internal mold release agent into the epoxy component and/or the hardener component before the epoxy component and the hardener component are brought together.

Suitable particulate fillers or extenders have an aspect ratio of less than 5, preferably less than 2, and do not melt or thermally degrade under the conditions of the curing reaction. Suitable fillers include, for example, glass flakes, aramid particles, carbon black, carbon nanotubes, various clays such as montmorillonite, and other mineral fillers such as wollastonite, talc, mica, titanium dioxide, barium sulfate, calcium carbonate, calcium silicate, flint powder, carborundum, molybdenum silicate, sand, and the like. Some fillers are somewhat electroconductive, and their presence in the composite can increase the electroconductivity of the resulting composite. Preferably, in some applications, such as automotive applications, the composite is sufficiently electroconductive that coatings can be applied to the composite using so-called "e-coat" methods, in which an electrical charge is applied to the composite and the coating becomes electrostatically attracted to the composite. Suitable conductive fillers include metal particles (such as aluminum and copper), carbon black, carbon nanotubes, graphite and the like.

The two component resin mixture of the present invention provides, when cured at a temperature of 130°C and 101 kPa for 300 seconds, a gel time of at least 10 seconds, at least 15 seconds, or, preferably, at least 20 seconds, and a demold time at 130 °C and 101 kPa of no greater than 180 seconds, or, preferably, no greater than 160 seconds, or, more preferably, no greater than 120 seconds, or, even more preferably, no greater than 60 seconds.

The two component resin mixtures of the present invention are formed by mixing the (i) epoxy resins and the (ii) hardener component at proportions as disclosed above and curing the resulting mixture. Either or both of the components can be preheated if desired before they are mixed with each other. It is generally necessary to heat the mixture to an elevated temperature to obtain a rapid cure.

In molding methods, such as the methods to make molded composites, the two component resin mixture is introduced into a mold, which may be preheated, together with any heat resistant fiber compositions, such as inserts as may be contained in the mold. The curing temperature may be, for example, from 60 to 180°C. To insure a long gel time (at least 10 seconds, preferably at least 20 seconds), the curing temperature preferably is not greater than 160 °C. When both a long gel time and a short demold time is wanted, a suitable curing temperature is 80 to 160°C, preferably 100 to 150°C and especially 110 to 140°C.

Preferably, curing is continued for a time until the two component resin mixture attains a DSC Tg in excess of the cure temperature at the time of demolding.

Curing times range from 30 to 300 seconds or less, or, preferably, 240 seconds or less, or, more preferably, 180 seconds or less, or, even more preferably, 120 seconds or less or 60 seconds or less.

In the methods of making the composites of the present invention, the two component resin mixture is used for making fiber-reinforced composites by curing the system in the presence of a heat resistant fiber composition. The composites are in general made by mixing the (i) epoxy resin component with the (ii) hardener component to form a two component resin mixture of the present invention, wetting the fibers with the mixture, and then curing the mixture in the presence of the heat resistant fiber compositions.

Suitable heat resistant fiber compositions are those fibers that are thermally stable and have a melting temperature such that the reinforcing fibers do not degrade or melt during the curing process. Suitable fiber materials include, for example, glass, quartz, polyaramid, boron, carbon, wheat straw, hemp, sisal, cotton, bamboo and gel-spun polyethylene fibers.

The heat resistant fiber compositions can be in the form of short (0.5 to 15 cm) fibers, long (greater than 15 cm) fibers or continuous rovings. Such fibers can be provided in the form of a mat or other preform if desired; such mats or preforms may in some embodiments be formed by entangling, weaving and/or stitching the fibers, or by binding the fibers together using an adhesive binder. Preforms may approximate the size and shape of the finished composite article (or portion thereof that requires reinforcement). Mats of continuous or shorter fibers can be stacked and pressed together, typically with the aid of a tackifier, to form preforms of various thicknesses, if required.

Suitable tackifiers for preparing preforms (from either continuous or shorter fibers) include heat-softenable polymers such as those disclosed, for example, in U.S. Patent Nos. 4,992,228, 5,080,851 and 5,698,318. The tackifier should be compatible with and/or react with the two component resin mixture, so that there is good adhesion between the resulting polymer and the heat resistant fibers. A heat-softenable epoxy resin or mixture thereof with a hardener, as disclosed in U. S. Patent No. 5,698,318, is especially suitable. The tackifier may contain other components, such as one or more catalysts, a thermoplastic polymer, a rubber, or other modifiers.

A sizing or other useful coating may be applied onto the surface of the heat resistant fibers before they are introduced into a mold. A sizing often promotes adhesion between the cured epoxy resin and the fiber surfaces.

The composites of the present invention can be formed by compression molding, such as in a mold stationed within a compression or stamping press.

The composites of the present invention may be formed in a mold wherein the heat resistant fiber compositions are introduced into the mold before the two component resin mixture. This is normally the case when a fiber preform is used. The fiber preform is placed into the mold, the mold is closed, and the two component resin mixture is then introduced into the mold, where it penetrates between the fibers in the preform, fills the cavity, and then cures to form a composite product. Alternatively, the fibers (including a preform) can be deposited into an open mold, and the two component resin mixture can be sprayed, poured or injected onto the preform and into the mold. After the mold is filled in this manner, the mold is closed and the resin system cured.

Preferably, methods wherein the heat resistant fiber compositions are deposited into an open mold comprise gap compression resin transfer molding, in which the mold containing the fibers is kept open with a gap which may be, for example, 3 to 100 % or more of the original mold cavity thickness. The gap permits lower flow resistance, which makes mold filling easier and facilitates penetration of the reaction mixture around and between the fibers.

Short fibers can be introduced into the mold with the two component resin mixture. Such short fibers may be, for example, blended with the (i) epoxy resin or (ii) hardener component (or both) prior to forming the two component resin mixture. Alternatively, the short fibers may be added into the two component resin mixture at the same time as the (i) epoxy resin and (ii) hardener are mixed, or afterward but prior to introducing the hot two component resin mixture into the mold. Further, alternatively, short fibers can be sprayed into a mold. In such cases, the two component resin mixture can also be sprayed into the mold, at the same time or after the short fibers are sprayed in. When the heat resistant fiber compositions and two component resin mixture are sprayed simultaneously, they can be mixed together prior to spraying. Alternatively, the heat resistant fiber compositions and the two component resin mixture can be sprayed into the mold separately but simultaneously. The sprayed materials may be spread and/or leveled using a doctor blade or similar device before closing the mold and curing. For example, long fibers are chopped into short lengths and the chopped fibers are sprayed into the mold, when or immediately before a hot two component resin mixture is sprayed in.

The mold surface may be treated with an external mold release agent, which may contain solvent or water.

The particular equipment that is used to mix the components of the two component resin mixture and transfer the mixture to the mold is not considered critical to the invention, provided the two component resin mixture can be transferred to the mold before it attains a high viscosity or develops significant amounts of gels.

Suitable mixing apparati can be of any type that can produce a highly homogeneous mixture of the (i) epoxy resins and (ii) hardener component (and any optional materials that are also mixed in at this time). Mechanical mixers and stirrers of various types may be used. Two preferred types of mixers are static mixers and impingement mixers. For example, the mixing and dispensing apparatus can be an impingement mixer. Mixers of this type are commonly used in so-called reaction injection molding processes to form polyurethane and polyurea moldings. The two sides of the two component resin mixture (and other materials which are mixed in at this time) are pumped under pressure into a mixing head where they are rapidly mixed together. Operating pressures in high pressure mold apparati may range from 6.9 to 200 MPa or higher (1,000 to 29,000 psi or higher), although some low pressure machines can operate at significantly lower pressures. The resulting mixture is then preferably passed through a static mixing device to provide further additional mixing, and then transferred into the mold cavity. The static mixing device may be designed into the mold, thereby allowing the static mixing device to be opened easily for cleaning.

The epoxy resins and the (ii) hardener of the two component resin mixture are mixed by pumping them under pressure into a mixing head. Impingement mixing may be used. The epoxy resin is introduced with the hardener, or as a separate stream. The operating pressure of the incoming epoxy resin and hardener streams may range from a somewhat low 1 to 6.9 MPa to a high value of, for example, from 6.9 to 200 MPa. The resulting mixture of epoxy resin, hardener and catalyst is then introduced into the mold at a somewhat low operating pressure, such as up to 5 MPa or up to about 1.035 MPa. Further, two component resin mixture may be passed through a static mixer before entering the mold. Some or all the pressure drop between the mix-head and the mold injection port often will take place through such a static mixer. An especially preferred apparatus for conducting the process is a reaction injection molding (RIM) machine, such as is commonly used to processes large polyurethane and polyurea moldings. Such machines are available commercially from Krauss Maffei Corporation and Cannon or Hennecke.

The methods of the present invention are amenable to resin transfer molding (RTM), vacuum assisted RTM (VARTM), resin fluid injection (RFI), compression molding, such as gap compression resin transfer molding and SCRIMP processing methods and equipment (in some cases with equipment modification to provide the requisite heating at the various stages of the process), as well as to other methods such as wet compression molding.

A wet compression molding method can be used, in which the two component resin mixture, such as can be formed in an impingement mixer or high pressure mixing head, is applied directly to a fiber preform or stack without injection by spraying (e.g. from two spray heads on ether side of the preform), or by laying it down as "bands" of system, which are being fed through a wider slit die, which could have a width of 1 cm to 50 cm or more. Sufficient material is applied to reach the desired fiber volume content in the final product. The two component resin mixture can be applied to the fibers inside an open mold, or outside the mold. The two component resin mixture may instead be applied to the center layer of a buildup, by wetting a layer of fibers with the two component resin mixture and then putting a second layer of fibers onto the wetted surface, therefore sandwiching a resin layer in between two layers of fibers. The fiber mats can be made out of non crimped fiber buildups, of woven fabric, of random fiber build-ups or preforms. If the two component resin mixture is applied to the fibers outside of the mold, it is typically applied at a somewhat low temperature, to prevent premature curing, and to increase the viscosity of the two component resin mixture so it does not drip off the fibers before they are transferred into the mold. The wetted preform is then placed into the lower half of a hot mold, the mold is closed and the contents cured under compression.

In a molding method, the mold may contain, in addition to the heat resistant fiber compositions, one or more inserts. Such inserts may function as reinforcements, may function as flow promoters, and in some cases may be present for weight reduction purposes. Examples of such inserts include, for example, wood, plywood, metals, various polymeric materials, or glass, which may be foamed or unfoamed, such as polyethylene, polypropylene, another polyolefin, a polyurethane, polystyrene, a polyamide, a polyimide, a polyester, polyvinylchloride and the like, various types of composite materials, and the like, that do not become distorted or degraded at the temperatures encountered during molding.

The heat resistant fiber compositions may be enclosed in a bag or film such as is commonly used in vacuum assisted processes.

In some methods of the present invention, the two component resin mixture is mixed as above, and then sprayed into a mold. Temperatures are maintained in the spray zone such that the temperature of the hot two component resin mixture is maintained as described above.

The mold and the heat resistant fiber composition preform (and any other inserts, if any) may be heated to the curing temperature or some other useful elevated temperatures prior to contacting them with the two component resin mixture of the present invention. Suitable temperatures may range from 40 to 200 °C, for example, from 80 to 140 °C, or, preferably, 100 to 120 °C.

A suitable mold for use in the present invention is a metal mold, but it may be ceramic or a polymer composite provided the mold is capable of withstanding the pressure and temperature conditions of the molding methods of the present invention. The mold contains one or more inlets, in liquid communication with the mixer(s), through which the two component resin mixture is introduced. The mold may contain vents to allow gases to escape as the two component resin mixture is injected into the mold.

A suitable mold for use in the present invention is held in a press or other apparatus which allows it to be opened and closed, and which can apply pressure on the mold to keep it closed during the filling and curing operations. The mold or press is provided with heat or cooling means.

Suitable molds for use in the present invention are molds with a pinch edge that forms the edge of the substrate (composite article forming material) perimeter in a way that still requires post-mold trimming, but facilitates a more efficient trimming operation. Other molds have no provision for in-mold edge treatment and produce a composite that will require post-mold finishing and trimming. Still other molds have a "shear edge," which cuts away all material outside the parting line during the molding process, producing a finished composite article out of the mold.

In accordance with the methods of the present invention, the molded composite is demolded in no more than 180 s at 130 °C and 101 kPa, or, preferably, from 20 to 160 s at 130 °C and 101 kPa, more preferably from 20 to 120 s at 130 °C and 101 kPa, after the two component resin mixture has been introduced into the mold. In such methods, the introduced resin system flows around and between the reinforcing fibers and fills the mold and then cures in the mold, preferably forming a polymer having a glass transition temperature of at least 120°C (more preferably at least 130°C or at least 140°C) within three minutes, more preferably within two minutes, after the reaction mixture has been introduced into the mold.

Some suitable postmolding procedures include application of carpeting to one or both sides of a mold and the attachment of latches and bezels to the mold.

The methods of the present invention can be used to make a wide variety of composite products, including various types of automotive or other transportation parts. Examples of these composites include vertical and horizontal body panels, automobile and truck chassis components, and so-called "body-in-white" structural components. Body panel applications include fenders, door skins, hoods, roof skins, decklids, and tailgates. Body panels often require a "class A" automotive surface which has a high distinctness of image (DOI). For this reason, a filler in many body panel applications will include a material such as mica or wollastonite.

Parts made in accordance with the present invention may be in some cases subjected to high temperatures. For example, protective coatings as are commonly used in automotive manufacturing processes often are applied electrostatically in a so-called "ecoat" process, and then subjected to a bake cure wherein the composite may be subject to a temperature of 140 to 220°C, for a period of 10 to 60 minutes. The composite made in accordance with the present invention which are to be coated in such a manner should have a high enough glass transition temperature as to be able to withstand the high temperature of the bake temperature. In addition, an electroconductive filler may be incorporated into the composite to increase the electrical conductivity of the part, to facilitate the electrodeposition process.

### EXAMPLES:

The following examples are used to illustrate the present invention without limiting it to those examples. Unless otherwise indicated, all temperatures are ambient temperatures and all pressures are 1 atmosphere.

The following materials and chemicals were used in the Examples that follow:
Epoxy Resin 1: Liquid epoxy resins (The Dow Chemical Co., Midland, MI (Dow)), each of which is a digycidyl ether of bisphenol A, EEW 175 to 181 g/eq and less than 1 wt.% of monohydrolyzed resin;
Epoxy Resin 2: A blend of Epoxy Resin 1 (60 wt.%), and [D.E.N. Dow]epoxy novolac resin, EEW 175 - 181 g/eq (40 wt.%); Epoxy Resin 3: A blend of Epoxy novolac resin, EEW 176 to 181 g/eq (15 wt.%), a diglycidyl ether of bisphenol A, having an epoxy equivalent weight of from 182-192 (15 %), and 3,4-Epoxycyclohexylmethyl-3,4-epoxycyclohexanecarboxylate (CAS : 2386-87-0) EEW: 131-143 (70%);
DETA: diethylene triamine, AHEW 20.6 g/eq;
TETA: triethylenetetraamine, AHEW 24.4 g/eq;
2-PI: 2-phenylimidazole, CAS: 670-96-2;
Hardener 2: A mixture of 93 wt.% of TETA and 7 wt.% of 2-PI;
Hardener 3: A mixture of 1,2-Diaminocyclohexane (CAS#694-83-7) 95 wt.% and 2-PI 5 wt.%;
Hardener 4: A mixture of Nadic METH E™ methyl anhydride (Polynt S.p.A., Bergamo IT) (85.01 wt.%), core shell rubber PARALOID™ EXL 2650 A (11.41 wt.%), HYCAT™ 3000s (Dimension Technology Chemical Systems, Inc., Fair Oaks, CA) trivalent chromium (III) carboxylate complex containing <10 wt.% phenol and <10 wt.% benzyldimethylamine (1.79 wt.%), 1 methyl imidazole (1.79 wt.%).

### Test Methods:

Dynamic Differential Scanning Calorimetry (DSC): Dynamic DSC was used to determine the reported Tg of the indicated resins and formulations, wherein each indicated material was heated from 25 to 200 °C on a heating ramp of 20°C/min, then kept isothermal at 200 °C for three minutes, then cooled on a ramp of 20 °C/min down to 25 °C and was kept isothermal at 25 °C for three minutes, and was then heated to 200 °C a second time while DSC was performed using a heating ramp of 20 °C/min, followed by keeping the material isothermal at 200 °C for 3 minutes, and cooling on a ramp of 20 °C/min to 25 °C. Tg onset and Tg midpoint were determined, respectively, as the onset of the plateau on the resulting DSC curve and the inflection point on the resulting DSC curve.
Gel Time and Demold Time: The indicated epoxy resin (at approximately 40 °C) and hardener composition (at approximately 25 °C) were brought together in the indicated ratio and mixed for 30 seconds. The resulting mixture was poured onto a hot plate preheated to 130°C to form a disk of the mixture on the surface of the plate, at which point a timer was started at "0". Time was measured from the point at which the mixture contacts the hot plate surface. The hot plate was maintained at 130°C as the mixture cured. Periodically, a pallet knife was pulled through the liquid disk to displace the mixture. The gel time (GT) was recorded as the time after which the mixture would no longer flow into the scored line. Demold time (DMT) was recorded as the time after pouring at which the disk can be removed from the hot plate surface as a solid, using the pallet knife. The Gel Time and Demold Time reported in Table 1, below, represent the value taken from one trial for each indicated material.
Composite 90° Tensile Modulus: This property was measured according to standard ISO 527-4 (International Organization for Standardization, Geneva, CH, 1997) using a unidirectional (UD) fabric).
Composite 90° Tensile Strength: This property was measured according to standard ISO 527-4 (1997) with UD fabric.

**Table 1: Two Component Resin Mixtures and Their Performance**

| **Example** | **Resin** | **Hardener** | **Mix Ratio Stoichiometry** | | **Gel Time (s)** | **Demold Time (s)** | **Tg onset (°C)** | **Tg midpt (°C)** |
|---|---|---|---|---|---|---|---|---|
| **Comp 1** | Epoxy Resin 1 | TETA | 100:13.7 | 1:1 | 37 | >300 | 102 | 112 |
| **Comp 2** | Epoxy Resin 1 | TETA | 100:15.1 | 1:1.1 | 35 | >300 | 96 | 111 |
| **Comp 3** | Epoxy Resin 2 | TETA | 100:13.9 | 1:1 | 28 | 180 | 124 | 133 |
| **1** | Epoxy Resin 1 | Hardener 2 | 100:14.7 | 1:1 | 34 | 90 | 134 | 141 |
| **2** | Epoxy Resin 1 | Hardener 2 | 100:16.2 | 1: 1.1 | 32 | 90 | 130 | 140 |
| **3** | Epoxy Resin 2 | Hardener 2 | 100:14.9 | 1:1 | 26 | 60 | 142 | 156 |

Comparative Examples 1 and 2 demonstrate that use of the TETA-E hardener with the epoxy resin 1 obtain a low Tg with long demold time. However, good latent behavior is shown in terms of the gel time. This latent behavior is important to fill molds for large complex parts with high carbon fiber volume fractions of 50 % or more and is a key feature to maintain in any new formulation. Inventive Examples 1 and 2 including 2-phenylimidazole demonstrate the ability to maintain gel time (positive latent behavior) while significantly increasing the glass transition temperature (by up to 30 °C) and reducing the demolding time (by over 210 seconds) under the cure conditions. Using epoxy resin 2, comprising a bisphenol A resin combined with a novolac epoxy resin to increase the DSC Tg of the resin, inventive Example 3 including 2-phenylimidazole gave increased DSC Tg and a dramatically faster demold time at 130 °C and 101 kPa without sacrificing the open time of comparative Example 3.

A composite panel in Example 4 was produced via a hand-mixed, hand-poured wet compression process. In this process, the two component resin mixture of a resin component (50 °C) and a hardener component (20 to 25 °C) was mixed via a drill mixer for a period of 30 seconds at the required ratio before being poured directly on top of a fiber preform comprised of 6 layers of unidirectional carbon fiber fabric that resided in an open mold at 130 °C. During the pouring on to the carbon fiber preform, the two component resin mixture was laid down in bands from top to bottom of the preform. Once the two component resin mixture was fully filled into the mold, the mold was closed to allow impregnation of the two component resin mixture into the carbon fiber preform and for the part to achieve full cure. The panel was cured for 180 seconds.

In Comparative Examples 4 and 5, composite panels were formed in a KraussMaffei high pressure 2-component epoxy RTM machine (KraussMaffei Technologies GmbH) operating on a 120-ton press equipped with a thermostated steel mold capable of creating rectangular plaques having dimensions 500 x 270 x 2 mm. The temperature of the components in the epoxy resin component was set to 80°C and to 50°C for the hardener component; catalysts, if any, were pre-blended with the hardener. The mold temperature was set to 140°C in Comparative Example 4 and 160 °C in Comparative Example 5; injection of the two component resin mixture was performed through an injection hole located in the top part of the mold after mold closure and subsequent evacuation to 0.02 bars. The part in Comparative Examples 4 and 5 was molded 240 seconds.

Glass transition temperatures in Table 2, below, were tested by removing a circular piece (5mm diam x 2mm thick) of the molded composite and placing that in the calorimeter (DSC).

**Table 2: More Results**

| | **Units** | **Comparative Example 4** | **Comparative Example 5** (from U.S. 8742018B2 to Reynolds et al.) | **Example 4** |
|---|---|---|---|---|
| T_{g} mid-point (DSC) | °C | 195 | 210 | 135 |
| Composite 90° Tensile Modulus | MPa | 8050 | 6800 | 8300 |
| Composite 90° Tensile Strength | MPa | 45 | 48 | 56 |
| Process Mold Temperature | °C | 140 | 160 | 130 |
| Gel Time (hot plate test) | s | 80 | 60 | 32 |
| Demold Time (actual) | s | >240 | 240 | 180 |
| Post cure required | | Yes | No | No |
| Fabrication Method | | RTM | RTM | LCM |

In Table 2, above, the indicated materials were tested as indicated above. Where indicated, a post cure was performed in an oven. In Comparative Example 4, epoxy resin 2 was used and the Hardener 3 was used, wherein the epoxy resins and the hardener were mixed at a weight proportion of 100 (resin): 17 (Hardener). To achieve a suitable final cure performance an isothermal post cure was carried out for 30 mins at @ 200°C. In Comparative Example 5, Epoxy resin 3 and Hardener 4 was used in a weight ratio of 100 (resin): 136 (Hardener). In Inventive Example 4, Epoxy Resin 1 and Hardener 2 were used at a mix ratio of 100 (resin): 16.2 (Hardener).

Not shown in any table, the two component resin mixture Inventive Example 4 cured in 90 s or less to give a cured resin having a DSC Tg of above 135 °C without the use of a hardener component comprising a cycloaliphatic compound and without any post cure. This demonstrates the capability of the inventive compositions to enable mass production of carbon fiber composites with higher build volumes via the RTM or LCM techniques.

As shown in Table 2, above, in Example 4 final composite performance can be gained "out of tool" with no requirement for additional process steps such as post curing. Further, as shown by Tensile Modulus and Tensile Strength results, the material produced in inventive Example 4 does not require a toughening agent to perform like that of Comparative Example 5. In addition, all of the Comparatives in Table 2 above, were formed in a vacuum using a resin transfer process which gives them the expected advantage of improved resin flow, transfer and filling the mold. The inventive two component resin mixture in Example 4 gave a surprisingly short gel time and, in a molded part, exhibited a dramatic improvement in tensile strength after a shorter mold time.

## Claims

1. A curable moldable composition comprising from 10 to 80 volume % of heat resistant fiber compositions, a two component resin mixture of (i) one or more epoxy resins, and (ii) a hardener comprising a combination of triethylenetetraamine (TETA) and from 3 to 15 wt.%, based on the weight of the TETA, of 2-phenylimidazole (2-PI), wherein the two component resin mixture has upon mixing a viscosity of from 10 to 100 mPa.s at 130 °C, where viscosity is measured using the method described in the present specification.

2. The curable moldable composition as claimed in claim 1, wherein the heat resistant fiber composition is chosen from carbon fiber, glass fiber, ceramic fiber, acrylonitrile fiber, aramid fiber, or their admixtures.

3. The curable moldable composition as claimed in claim 1, wherein the (i) one or more epoxy resins is a bisphenol A or F diglycidyl ether epoxy resin.

4. The curable moldable composition as claimed in claim 1, wherein the two component resin mixture of the curable moldable compositions has a DSC glass transition temperature (Tg) of from 130 to 180 °C, when cured at 130 °C for 90 seconds at a pressure of 101 kPa, where the glass transition temperature (Tg) is measured using the method given in the present description.

5. The curable moldable composition as claimed in claim 1, wherein the ratio of molar equivalents of the (i) one or more epoxy resins to the molar equivalents of amine hydrogens in the combination of TETA and 2-PI in the two component resin mixture ranges from 0.7:1 to 1.4:1.

6. The curable moldable composition as claimed in claim 1, wherein the one or more heat resistant fiber compositions is chosen from a continuous fiber material, a non-woven fiber material, a mat or a stack of two or more mats, and a material comprising both continuous and discrete fibers.

7. The curable moldable composition as claimed in claim 1, wherein the composition further comprises one or more impact modifiers, internal mold release agents, reactive diluents, coalescents, pigments, particulate fillers, extenders, tackifiers, antioxidants and wetting agents.

8. A composite article comprising a matrix of a cured two component resin mixture of (i) one or more epoxy resins, and (ii) a hardener comprising a combination of triethylenetetraamine (TETA) and from 3 to 15 wt.%, based on the weight of the TETA, of 2-phenylimidazole (2-PI), and, within the matrix, from 10 to 80 volume % of the total composite article, of a heat resistant fiber composition.

9. A composite article as claimed in claim 8, wherein the cured two component resin mixture has a DSC glass transition temperature (Tg) of from 130 to 180 °C when cured at 130 °C for 90 seconds at a pressure of 101 kPa, where the glass transition temperature (Tg) is measured using the method given in the present specification.

10. A method of making a fiber reinforced resin matrix composite article comprising:
forming a two component resin mixture of (i) one or more epoxy resins, and (ii) a hardener comprising a combination of triethylenetetraamine (TETA) and from 3 to 15 wt.%, based on the weight of the TETA, of 2-phenylimidazole (2-PI), wherein the two component resin mixture has upon mixing a viscosity of from 10 to 100 mPa.s at 130 °C;
where viscosity is measured using the method described in the present specification;
wetting a heat resistant fiber composition comprising one or more heat resistant fibers in the amount of from 10 to 80 volume % of the total heat resistant fiber composition and the total two component resin mixture; and,
curing the two component resin mixture at a temperature of from 60 to 200 °C and at a pressure of from 200 to 7500 kPa (2 to 100 bar) and for a time of from 15 to 300 s.

## Patentansprüche

1. Eine härtbare formbare Zusammensetzung, beinhaltend zu 10 bis 80 Volumen-% wärmebeständige Faserzusammensetzungen, ein Zweikomponenten-Harzgemisch aus (i) einem oder mehreren Epoxidharzen und (ii) einem Härter, beinhaltend eine Kombination von Triethylentetraamin (TETA) und zu 3 bis 15 Gew.-%, bezogen auf das Gewicht des TETA, 2-Phenylimidazol (2-PI), wobei das Zweikomponenten-Harzgemisch nach dem Mischen eine Viskosität von 10 bis 100 mPa·s bei 130 °C aufweist, wobei die Viskosität unter Verwendung des in der vorliegenden Patentschrift beschriebenen Verfahrens gemessen wird.

2. Härtbare formbare Zusammensetzung gemäß Anspruch 1, wobei die wärmebeständige Faserzusammensetzung aus Kohlenstofffaser, Glasfaser, Keramikfaser, Acrylnitrilfaser, Aramidfaser oder deren Mischungen ausgewählt ist.

3. Härtbare formbare Zusammensetzung gemäß Anspruch 1, wobei (i) das eine oder die mehreren Epoxidharze ein Bisphenol-A- oder -F-diglycidylether-Epoxidharz sind.

4. Härtbare formbare Zusammensetzung gemäß Anspruch 1, wobei das Zweikomponenten-Harzgemisch der härtbaren formbaren Zusammensetzung eine DSC-Glasübergangstemperatur (Tg) von 130 bis 180 °C aufweist, wenn das Härten bei 130 °C für 90 Sekunden bei einem Druck von 101 kPa erfolgt, wobei die Glasübergangstemperatur (Tg) unter Verwendung des in der vorliegenden Beschreibung beschriebenen Verfahrens gemessen wird.

5. Härtbare formbare Zusammensetzung gemäß Anspruch 1, wobei das Verhältnis der Moläquivalente des (i) einen oder der mehreren Epoxidharze zu den Moläquivalenten der Aminwasserstoffe in der Kombination von TETA und 2-PI in dem Zweikomponenten-Harzgemisch im Bereich von 0,7 : 1 bis 1,4 : 1 liegt.

6. Härtbare formbare Zusammensetzung gemäß Anspruch 1, wobei die eine oder mehreren wärmebeständigen Faserzusammensetzungen aus einem Endlosfasermaterial, einem Faservliesmaterial, einer Matte oder einem Stapel von zwei oder mehreren Matten und einem Material, das sowohl Endlosfasern als auch Einzelfasern beinhaltet, ausgewählt sind.

7. Härtbare formbare Zusammensetzung gemäß Anspruch 1, wobei die Zusammensetzung ferner eines oder mehrere der Folgenden beinhaltet: Schlagzähigkeitsverbesserer, interne Formentrennmittel, reaktive Verdünnungsmittel, Koaleszenzmittel, Pigmente, Teilchenfüllstoffe, Streckmittel, Klebrigmacher, Antioxidantien und Benetzungsmittel.

8. Ein Verbundartikel, beinhaltend eine Matrix aus einem gehärteten Zweikomponenten-Harzgemisch aus (i) einem oder mehreren Epoxidharzen und (ii) einem Härter, beinhaltend eine Kombination von Triethylentetraamin (TETA) und zu 3 bis 15 Gew.-%, bezogen auf das Gewicht des TETA, 2-Phenylimidazol (2-PI), und innerhalb der Matrix zu 10 bis 80 Volumen-% des gesamten Verbundartikels eine wärmebeständige Faserzusammensetzung.

9. Verbundartikel gemäß Anspruch 8, wobei das gehärtete Zweikomponenten-Harzgemisch eine DSC-Glasübergangstemperatur (Tg) von 130 bis 180 °C aufweist, wenn das Härten bei 130 °C für 90 Sekunden bei einem Druck von 101 kPa erfolgt, wobei die Glasübergangstemperatur (Tg) unter Verwendung des in der vorliegenden Patentschrift beschriebenen Verfahrens gemessen wird.

10. Ein Verfahren zur Herstellung eines faserverstärkten Harzmatrixverbundartikels, das Folgendes beinhaltet:
Bilden eines Zweikomponenten-Harzgemischs aus (i) einem oder mehreren Epoxidharzen und (ii) einem Härter, beinhaltend eine Kombination von Triethylentetraamin (TETA) und zu 3 bis 15 Gew.-%, bezogen auf das Gewicht des TETA, 2-Phenylimidazol (2-PI), wobei das Zweikomponenten-Harzgemisch nach dem Mischen eine Viskosität von 10 bis 100 mPa·s bei 130 °C aufweist, wobei die Viskosität unter Verwendung des in der vorliegenden Patentschrift beschriebenen Verfahrens gemessen wird;
Benetzen einer wärmebeständigen Faserzusammensetzung, die eine oder mehrere wärmebeständige Fasern in einer Menge von 10 bis 80 Volumen-% der gesamten wärmebeständigen Faserzusammensetzung und des gesamten Zweikomponenten-Harzgemischs beinhaltet; und
Härten des Zweikomponenten-Harzgemischs bei einer Temperatur von 60 bis 200 °C und bei einem Druck von 200 bis 7500 kPa (2 bis 100 bar) und für einen Zeitraum von 15 bis 300 s.

## Revendications

1. Une composition moulable durcissable comprenant de 10 à 80 % en volume de compositions de fibre résistant à la chaleur, un mélange de résine à deux constituants (i) d'une ou plusieurs résines époxy, et (ii) d'un durcisseur comprenant une combinaison de triéthylène-tétraamine (TETA) et de 3 à 15 % en poids, rapporté au poids du TETA, de 2-phénylimidazole (2-PI), le mélange de résine à deux constituants ayant une fois mélangé une viscosité allant de 10 à 100 mPa·s à 130 °C, où la viscosité est mesurée à l'aide du procédé décrit dans la présente spécification.

2. La composition moulable durcissable telle que revendiquée dans la revendication 1, dans laquelle la composition de fibre résistant à la chaleur est choisie parmi la fibre de carbone, la fibre de verre, la fibre céramique, la fibre acrylonitrile, la fibre aramide, ou leurs mélanges additionnels.

3. La composition moulable durcissable telle que revendiquée dans la revendication 1, dans laquelle les (i) une ou plusieurs résines époxy sont une résine époxy de diglycidyl éther de bisphénol A ou F.

4. La composition moulable durcissable telle que revendiquée dans la revendication 1, dans laquelle le mélange de résine à deux constituants de la composition moulable durcissable a une température de transition vitreuse (Tg) par DSC allant de 130 à 180 °C, lorsqu'il est durci à 130 °C pendant 90 secondes à une pression de 101 kPa, où la température de transition vitreuse (Tg) est mesurée à l'aide du procédé donné dans la présente description.

5. La composition moulable durcissable telle que revendiquée dans la revendication 1, dans laquelle le rapport d'équivalents molaires des (i) une ou plusieurs résines époxy aux équivalents molaires d'hydrogènes d'amine dans la combinaison de TETA et de 2-PI dans le mélange de résine à deux constituants est compris dans l'intervalle allant de 0,7/1 à 1,4/1.

6. La composition moulable durcissable telle que revendiquée dans la revendication 1, dans laquelle les une ou plusieurs compositions de fibre résistant à la chaleur sont choisies parmi un matériau de fibres continues, un matériau de fibres non tissées, un mat ou un empilement de deux mats ou plus, et un matériau comprenant à la fois des fibres continues et discrètes.

7. La composition moulable durcissable telle que revendiquée dans la revendication 1, dans laquelle la composition comprend en outre un ou plusieurs modificateurs de la résistance au choc, agents de démoulage internes, diluants réactifs, agents de coalescence, pigments, charges particulaires, extendeurs, tackifiants, antioxydants et agents mouillants.

8. Un article composite comprenant une matrice d'un mélange de résine à deux constituants durci (i) d'une ou plusieurs résines époxy, et (ii) d'un durcisseur comprenant une combinaison de triéthylène-tétraamine (TETA) et de 3 à 15 % en poids, rapporté au poids du TETA, de 2-phénylimidazole (2-PI), et, au sein de la matrice, de 10 à 80 % en volume de l'article composite total, d'une composition de fibre résistant à la chaleur.

9. Un article composite tel que revendiqué dans la revendication 8, dans lequel le mélange de résine à deux constituants durci a une température de transition vitreuse (Tg) par DSC allant de 130 à 180 °C lorsqu'il est durci à 130 °C pendant 90 secondes à une pression de 101 kPa, où la température de transition vitreuse (Tg) est mesurée à l'aide du procédé donné dans la présente spécification.

10. Un procédé de fabrication d'un article composite à matrice de résine renforcée par des fibres comprenant :
la formation d'un mélange de résine à deux constituants (i) d'une ou plusieurs résines époxy, et (ii) d'un durcisseur comprenant une combinaison de triéthylène-tétraamine (TETA) et de 3 à 15 % en poids, rapporté au poids du TETA, de 2-phénylimidazole (2-PI), le mélange de résine à deux constituants ayant une fois mélangé une viscosité allant de 10 à 100 mPa·s à 130 °C ; où la viscosité est mesurée à l'aide du procédé donné dans la présente spécification ;
le mouillage d'une composition de fibre résistant à la chaleur comprenant une ou plusieurs fibres résistant à la chaleur dans la quantité allant de 10 à 80 % en volume de la composition de fibre résistant à la chaleur totale et le mélange de résine à deux constituants total ; et,
le durcissement du mélange de résine à deux constituants à une température allant de 60 à 200 °C et à une pression allant de 200 à 7 500 kPa (de 2 à 100 bars) et pendant une durée allant de 15 à 300 s.
